(19) Europäisches Patentamt
European Patent Office
Office européen des brevets

(11) **EP 2 445 942 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**16.08.2017 Patentblatt 2017/33**

(45) Hinweis auf die Patenterteilung:
**14.08.2013 Patentblatt 2013/33**

(21) Anmeldenummer: **10726096.0**

(22) Anmeldetag: **24.06.2010**

(51) Int Cl.:
**C08F 220/06** *(2006.01)*     **A61L 15/60** *(2006.01)*
**C08J 3/24** *(2006.01)*

(86) Internationale Anmeldenummer:
**PCT/EP2010/058987**

(87) Internationale Veröffentlichungsnummer:
**WO 2010/149735 (29.12.2010 Gazette 2010/52)**

(54) **VERFAHREN ZUR HERSTELLUNG WASSERABSORBIERENDER POLYMERPARTIKEL MIT GERINGER VERBACKUNGSNEIGUNG UND HOHER ABSORPTION UNTER DRUCK**

PROCESS FOR PRODUCING WATER-ABSORBING POLYMER PARTICLES WITH LOW CAKING TENDENCY AND HIGH ABSORPTION UNDER PRESSURE

PROCÉDÉ DE FABRICATION DE PARTICULES POLYMÈRES ABSORBANT L EAU AYANT UNE FAIBLE TENDANCE À L AGGLOMÉRATION ET UNE ABSORPTION ÉLEVÉE SOUS PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **26.06.2009 EP 09008370**

(43) Veröffentlichungstag der Anmeldung:
**02.05.2012 Patentblatt 2012/18**

(73) Patentinhaber: **BASF SE**
**67056 Ludwigshafen am Rhein (DE)**

(72) Erfinder:
• **DANIEL, Thomas**
  **67165 Waldsee (DE)**
• **BAUDUIN, Christophe**
  **68723 Plankstadt (DE)**
• **HERFERT, Norbert**
  **63674 Altenstadt (DE)**

(74) Vertreter: **BASF IP Association**
**BASF SE**
**G-FLP-C006**
**67056 Ludwigshafen (DE)**

(56) Entgegenhaltungen:
| | |
|---|---|
| EP-A1- 1 840 157 | WO-A1-01/74913 |
| WO-A1-02/36663 | WO-A1-2004/096304 |
| WO-A1-2004/113452 | WO-A1-2005/044900 |
| WO-A1-2007/116777 | WO-A1-2008/092843 |
| WO-A2-2004/069915 | WO-A2-2006/111402 |
| WO-A2-2007/070776 | WO-A2-2007/121937 |
| US-A- 4 043 952 | US-A- 5 002 986 |

Bemerkungen:
Die Akte enthält technische Angaben, die nach dem Eingang der Anmeldung eingereicht wurden und die nicht in dieser Patentschrift enthalten sind.

EP 2 445 942 B2

**Beschreibung**

Die vorliegende Erfindung betrifft ein Verfahren zur Herstellung wasserabsorbierender Polymerpartikel mit geringer Verbackungsneigung und hoher Absorption unter Druck, wobei die wasserabsorbierenden Polymerpartikel vor, während oder nach der Oberflächennachvernetzung mit Siliziumdioxid und Aluminiumkationen beschichtet wurden.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymerpartikel werden üblicherweise durch Polymerisation geeigneter wässriger Monomerlösungen oder -suspensionen erhalten.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 $g/cm^2$ (AUL0.3psi) durchläuft ein Maximum.

Zur Verbesserung der Anwendungseigenschaften, wie beispielsweise Permeabilität des gequollenen Gelbetts (SFC) in der Windel und Absorption unter einem Druck von 49.2 $g/cm^2$ (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49,2 $g/cm^2$ (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet und thermisch oberflächennachvernetzt. Dazu geeignete Vernetzer sind Verbindungen, die mit mindestens zwei Carboxylatgruppen der wasserabsorbierenden Polymerpartikel kovalente Bindungen bilden können.

DE 35 23 617 A1 offenbart ein Verfahren zur Herstellung oberflächennachvernetzter wasserabsorbierender Polymerpartikel, wobei die Polymerpartikel zur Verbesserung der Fließfähigkeit und zur Verminderung der Verbackungsneigung mit Siliziumdioxid beschichtet werden.

WO 00/53644 A1 und WO 00/53664 A1 beschreiben die Verwendung vom Kationen zur Verbesserung von Zentrifugenretentionskapazität (CRC) und Permeabilität des gequollenen Gelbetts (SFC).

Aufgabe der vorliegenden Erfindung war die Bereitstellung eines verbesserten Verfahrens zur Herstellung wasserabsorbierender Polymerpartikel, insbesondere von wasserabsorbierenden Polymerpartikeln mit geringer Verbackungsneigung und hoher Absorption unter einem Druck von 49.2 $g/cm^2$ (AUL0.7psi).

Gelöst wurde die Aufgabe durch ein Verfahren zur Herstellung wasserabsorbierender Polymerpartikel durch Polymerisation einer Monomerlösung oder -suspension, enthaltend

> a) mindestens ein ethylenisch ungesättigtes, säuregruppentragendes Monomer, wobei die Säuregruppen zu 72 bis 85 mol-% neutralisiert sind,
> b) mindestens einen Vernetzer,
> c) mindestens einen Initiator,
> d) optional ein oder mehrere mit den unter a) genannten Monomeren copolymerisierbare ethylenisch ungesättigte Monomere und
> e) optional ein oder mehrere wasserlösliche Polymere,

umfassend Trocknung des erhaltenen wässrigen Polymergels, Mahlung, Klassierung, und thermische Oberflächennachvernetzung, dadurch gekennzeichnet, dass die wasserabsorbierenden Polymerpartikel vor der thermischen Oberflächennachvernetzung mit und 1,5 x $10^{-6}$ bis 6 x $10^{-6}$ mol/g Aluminiumkationen und nach der thermischen Oberflächennachvernetzung mit 0,0001 bis 0,25 Gew.-% Siliziumdioxid beschichtet werden.

Bei dem im erfindungsgemäßen Verfahren einzusetzenden Siliziumdioxid handelt es sich vorzugsweise um Polykieselsäuren, die je nach Herstellungsart zwischen Fällungskieselsäuren und pyrogenen Kieselsäuren unterschieden werden. Beide Varianten sind unter den Namen Silica FK, Sipernat®, Wessalon® (Fällungskieselsäuren) bzw. Aerosil® (pyrogene Kieselsäuren) kommerziell erhältlich.

Das Siliziumdioxid weist eine spezifische Oberfläche von vorzugsweise 10 bis 500 $m^2/g$, besonders bevorzugt von 20 bis 250 $m^2/g$, ganz besonders bevorzugt von 50 bis 200 $m^2/g$, und eine mittlere Partikelgröße von 1 bis 100 $\mu m$, besonders bevorzugt von 2 bis 50 $\mu m$, ganz besonders bevorzugt von 5 bis 20 $\mu m$, auf.

Die wasserabsorbierenden Polymerpartikel werden mit vorzugsweise 0,001 bis 0,2 Gew.-%, besonders bevorzugt mit 0,02 bis 0,15 Gew.-%, ganz besonders mit 0,08 bis 0,12 Gew.-%, Siliziumdioxid beschichtet.

Die wasserabsorbierenden Polymerpartikel werden nach der thermischen Oberflächennachvernetzung mit Siliziumdioxid beschichtet.

Die zum Beschichten mit Siliziumdioxid einsetzbaren Mischer unterliegen keiner Beschränkung. Vorteilhaft werden Mischer mit bewegten Mischwerkzeugen, wie Schneckenmischer, Scheibenmischer und Schaufelmischer, eingesetzt. Besonders bevorzugt sind Horizontalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Horizontalmischer sind beispielsweise Ruberg-Durchlaufmischer (Gebrüder Ruberg GmbH & Co KG, Nieheim, DE).

Im erfindungsgemäßen Verfahren werden die wasserabsorbierenden Polymerpartikel mit Aluminiumkationen beschichtet. Als Gegenion sind Chlorid, Bromid, Sulfat, Hydrogensulfat, Carbonat, Hydrogencarbonat, Nitrat, Phosphat, Hydrogenphosphat, Dihydrogenphosphat und vorzugsweise Carboxylat, wie Acetat und Lactat, möglich.

Besonders bevorzugt werden basische Carboxylate, wie basisches Aluminiumacetat, eingesetzt. Ganz besonders bevorzugt ist Aluminiummonoacetat (CAS Nr. [7360-44-3]). Bei den basischen Carboxylaten sind nicht alle in wässrigen Lösungen als Hydroxylanionen (OH-) abspaltbaren Hydröxidgruppen der salzbildenden Basen durch Carboxylatgruppen ersetzt.

Die wasserabsorbierenden Polymerpartikel werden mit vorzugsweise $2 \times 10^{-6}$ bis $6 \times 10^{-6}$ mol/g (mol Aluminiumkationen pro g wasserabsorbierende Polymerpartikel), besonders bevorzugt mit $3 \times 10^{-6}$ bis $6 \times 10^{-6}$ mol/g, ganz besonders mit $4 \times 10^{-6}$ bis $6 \times 10^{-6}$ mol/g, Aluminiumkationen beschichtet.

Die wasserabsorbierenden Polymerpartikel werden vor der thermischen Oberflächennachvernetzung mit Aluminiumkationen beschichtet.

Für die Beschichtung mit den Aluminiumkationen werden vorteilhaft die zum Aufsprühen des Oberflächennachvernetzers geeigneten Mischer verwendet.

Der vorliegenden Erfindung liegt die Erkenntnis zugrunde, dass die Absorption unter einem Druck von 49.2 $g/cm^2$ (AUL0.7psi) wasserabsorbierender Polymerpartikel durch Beschichtung mit Siliziumdioxid sinkt. Um eine ausreichende Verminderung der Verbackungsneigung zu erreichen, musste daher ein erheblicher Abfall der Absorption unter einem Druck von 49.2 $g/cm^2$ (AUL0.7psi) in Kauf genommen werden.

Weiterhin wurde gefunden, dass Aluminiumkationen und Siliziumdioxid synergistisch wirken, so dass in Anwesenheit von Aluminiumkationen wesentlich geringere Mengen an Siliziumdioxid eine ausreichende Verminderung der Verbackungsneigung bewirken.

Die Säuregruppen des ethylenisch ungesättigten, säuregruppentragende Monomeren sind vorzugsweise zu 72 bis 82 mol-%, besonders bevorzugt zu 74 bis 79 mol-%, ganz besonders bevorzugt von 75 bis 77 mol-%, neutralisiert. Der durch die Beschichtung mit Siliziumdioxid verursachte Abfall der Absorption unter einem Druck von 49.2 $g/cm^2$ (AUL0.7psi) nimmt mit steigendem Neutralisationsgrad ab, wobei gleichzeitig die Reaktionsgeschwindigkeit der thermischen Oberflächennachvernetzung abnimmt.

Besonders vorteilhaft ist die vorliegende Erfindung für wasserabsorbierende Polymerpartikel mit hoher Zentrifugenretentionskapazität (CRC). Die Eigenschaften wasserabsorbierender Polymerpartikel mit hoher Zentrifugenretentionskapazität (CRC) werden durch die Beschichtung mit Siliziumdioxid besonders nachteilig verändert. Daher ist die zusätzliche Beschichtung mit Aluminiumkationen zur Verminderung der notwendigen Menge an Siliziumdioxid in diesem Fall besonders nützlich. Die Zentrifugenretentionskapazität (CRC) der gemäß dem erfindungsgemäßen Verfahren erhältlichen wasserabsorbierenden Polymerpartikel beträgt daher vorzugsweise von 35 bis 45 g/g, besonders bevorzugt von 36 bis 40 g/g, ganz besonders bevorzugt von 35 bis 37 g/g. Die Zentrifugenretentionskapazität (CRC) kann durch Anpassung der Konzentration des Vernetzers b) angepasst werden. Mit steigender Konzentration des Vernetzers b) sinkt die Zentrifugenretentionskapazität (CRC) und die Absorption unter einem Druck von 21,0 $g/cm^2$ (AUL0.3psi) durchläuft ein Maximum.

Im Folgenden wird die Herstellung der wasserabsorbierenden Polymerpartikel näher erläutert:

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Zur Verbesserung der Trocknungseigenschaften kann das mittels eines Kneters erhaltene zerkleinerte Polymergel zusätzlich extrudiert werden.

Die Säuregruppen der erhaltenen Polymergele sind teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Es werden die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann mit einem Umluftbandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur $T_g$ auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 $\mu$m, besonders bevorzugt von 250 bis 600 $\mu$m, ganz besonders von 300 bis 500 $\mu$m. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 $\mu$m beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität des gequollenen Gelbetts (SFC). Daher sollte der Anteil zu kleiner Polymerpartikel ("fines") niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 $\mu$m, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von höchstens 600 $\mu$m, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel werden zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Aluminiumkationen weitere polyvalente Kationen auf die Partikeloberfläche aufgebracht.

Die im erfindungsgemäßen Verfahren einsetzbaren weiteren polyvalenten Kationen sind beispielsweise zweiwertige Kationen, wie die Kationen von Zink, Magnesium, Kalzium, Eisen und Strontium, dreiwertige Kationen, wie die Kationen von Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Außer Metallsalzen können auch Polyamine als polyvalente Kationen eingesetzt werden.

Die Einsatzmenge an weiterem polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl während als auch nach der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die O-berflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die Temperatur der wasserabsorbierenden Polymerpartikel im Trockner beträgt vorzugsweise von 100 bis 250°C, besonders bevorzugt von 130 bis 220°C, ganz besonders bevorzugt von 150 bis 200°C. Die Verweilzeit im Trockner beträgt vorzugsweise von 10 bis 120 Minuten, besonders bevorzugt von 10 bis 90 Minuten, ganz besonders bevorzugt von 30 bis 60 Minuten. Der Füllgrad des Trockners beträgt vorzugsweise von 30 bis 80%, besonders bevorzugt von 40 bis 75%, ganz besonders bevorzugt von 50 bis 70%. Der Füllgrad des Trockners kann über die Höhe des Ablaufwehrs eingestellt werden.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die Nachbefeuchtung wird die mechanische Stabilität der Polymerpartikel erhöht und deren Neigung zur statischen Aufladung vermindert.

Geeignete Beschichtungen zur Verbesserung der Anquellgeschwindigkeit sowie der Permeabilität des gequollenen Gelbetts (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole.

Ein weiterer Gegenstand der vorliegenden Erfindung sind die gemäß dem erfindungsgemäßen Verfahren erhältlichen wasserabsorbierenden Polymerpartikel.

Ein weiterer Gegenstand der vorliegenden Erfindung sind wasserabsorbierende Polymerpartikel aus vernetzten, säuregruppentragenden Polymeren, wobei die Säuregruppen zu 70 bis 85 mol-% neutralisiert sind, enthaltend 0,0001 bis 0,25 Gew.-% Siliziumdioxid und mindestens $1,5 \times 10^{-6}$ mol/g Aluminiumkationen.

Die wasserabsorbierenden Polymerpartikel enthalten vorzugsweise 0,001 bis 0,2 Gew.-%, besonders bevorzugt mit 0,02 bis 0,15 Gew.-%, ganz besonders mit 0,08 bis 0,12 Gew.-%, Siliziumdioxid.

Die wasserabsorbierenden Polymerpartikel enthalten vorzugsweise $2 \times 10^{-6}$ bis $15 \times 10^{-6}$ mol/g, besonders bevorzugt mit $3 \times 10^{-6}$ bis $10 \times 10^{-6}$ mol/g, ganz besonders mit $4 \times 10^{-6}$ bis $6 \times 10^{-6}$ mol/g, Aluminiumkationen.

Die Säuregruppen der wasserabsorbierenden Polymerpartikel sind vorzugsweise zu 72 bis 82 mol-%, besonders bevorzugt zu 74 bis 79 mol-%, ganz besonders bevorzugt von 75 bis 77 mol-%, neutralisiert.

Die erfindungsgemäßen wasserabsorbierenden Polymerpartikel weisen eine Zentrifugenretentionskapazität (CRC) von vorzugsweise von 25 bis 45 g/g, besonders bevorzugt von 30 bis 40 g/g, ganz besonders bevorzugt von 35 bis 37 g/g, auf. Die Zentrifugenretentionskapazität (CRC) wird gemäß der von der EDANA empfohlenen Testmethode Nr. WSP 241.2-05 "Centrifuge Retention Capacity" bestimmt.

Die erfindungsgemäßen wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Feuchtegehalt gemäß der von der EDANA empfohlenen Testmethode Nr. WSP 230.2-05 "Moisture Content" bestimmt wird.

Die erfindungsgemäßen wasserabsorbierenden Polymerpartikel weisen eine Absorption unter einem Druck von 49.2 g/cm² (AUL0.7psi) von typischerweise mindestens 15 g/g, vorzugsweise mindestens 18 g/g, bevorzugt mindestens 20 g/g, besonders bevorzugt mindestens 21 g/g, ganz besonders bevorzugt mindestens 22 g/g, auf. Die Absorption unter einem Druck von 49.2 g/cm² (AUL0.7psi) der wasserabsorbierenden Polymerpartikel beträgt üblicherweise weniger als 30 g/g. Die Absorption unter einem Druck von 49.2 g/cm² (AUL0.7psi) wird analog der von der EDANA empfohlenen Testmethode Nr. WSP 242.2-05 "Absorption under Pressure " bestimmt, wobei statt eines Drucks von 21,0 g/cm² ein Druck von 49,2 g/cm² eingestellt wird.

Ein weiterer Gegenstand der vorliegenden Erfindung sind Hygieneartikel, die erfindungsgemäße wasserabsorbierende Polymerpartikel enthalten. Die Hygieneartikel enthalten üblicherweise eine wasserundurchlässige Rückseite eine wasserdurchlässige Oberseite und dazwischen einen absorbierenden Kern aus den erfindungsgemäßen Polymerpartikeln und Cellulosefasern. Der Anteil der erfindungsgemäßen Polymerpartikel im absorbierenden Kern beträgt vorzugsweise 20 bis 100 Gew.-%, bevorzugt 50 bis 100 Gew.-%.

Die wasserabsorbierenden Polymerpartikel werden mittels der nachfolgend beschriebenen Testmethoden geprüft.

Methoden:

Die Messungen sollten, wenn nicht anders angegeben, bei einer Umgebungstemperatur von 23 $\pm$ 2 °C und einer relativen Luftfeuchte von 50 $\pm$ 10 % durchgeführt werden. Die wasserabsorbierenden Polymerpartikel werden vor der Messung gut durchmischt.

Zentrifugenretentionskapazität (Centrifuge Retention Capacity)

Die Zentrifugenretentionskapazität (CRC) wird gemäß der von der EDANA empfohlenen Testmethode Nr. WSP 241.2-05 "Centrifuge Retention Capacity" bestimmt.

Absorption unter einem Druck von 49,2 g/cm$^2$ (Absorption under Pressure)

Die Absorption unter einem Druck von 49,2 g/cm$^2$ (AUL0.7psi) wird analog der von der EDANA empfohlenen Testmethode Nr. WSP 242.2-05 "Absorption under Pressure" bestimmt, wobei statt eines Drucks von 21,0 g/cm$^2$ (AUL0.3psi) ein Druck von 49,2 g/cm$^2$ (AUL0.7psi) eingestellt wird.

Verbackungsneigung (Caking)

Zur Bestimmung der Verbackungsneigung wird das Leergewicht (Wd) einer Aluminium-Schale (5,7 cm Durchmesser) bestimmt. Anschließend werden 5 g wasserabsorbierende Polymerpartikel in die Aluminium-Schale eingewogen und die mit den wasserabsorbierenden Polymerpartikeln belegte Aluminium-Schale eine Stunde bei 40°C und 80% relativer Luftfeuchte im Kilmaschrank gelagert.

Nach der Lagerung wird die mit den wasserabsorbierenden Polymerpartikeln belegte Aluminium-Schale gewogen und das Gewicht (WHYD) notiert.

Anschließend wird das Leergewicht (WPAN) eines Siebes (1,7 mm Maschenweite und 76,2 mm Durchmesser) bestimmt, die wasserabsorbierenden Polymerpartikel auf das Sieb gegeben und mittels einer Vibrationssiebmaschine (0,2 cm Amplitude) eine Minute gesiebt.

Nach der Siebung wird das mit den wasserabsorbierenden Polymerpartikeln belegte Sieb gewogen und das Gewicht (WUNC) notiert.

Die Verbackungsneigung berechnet sich zu

$$Caking = \frac{WUNC - WPAN}{WHYD - Wd}$$

Die Verbackungsneigung gibt den Gewichtsanteil verklumpter wasserabsorbierender Polymerpartikel an und ist umso geringer je kleiner der Wert ist.

Die EDANA-Testmethoden sind beispielsweise erhältlich bei der EDANA, Avenue Eugène Plasky 157, B-1030 Brüssel, Belgien.

Beispiele

5009 g einer 37,3gew.-%igen wässrigen Natriumacrylatlösung wurden mit 477 g Acrylsäure und 430 g Wasser gemischt und mit Stickstoff inertisiert. Diese Mischung wurde in einen mit Stickstoff inertisierten Werner & Pfleiderer LUK 8,0 K2 Kneter (2 Sigma-Wellen) eingefüllt und nacheinander mit 9,0 g Polyethylenglykoldiacrylat (Diacrylat eines Polyethylenglykols mit einem mittleren Molgewicht von 400 g/mol), 4,4 g einer 1,0gew.-%igen wässrigen Ascorbinsäurelösung, 18,1 g einer 15gew.-%igen wässrigen Natriumpersulfatlösung und 3,9 g einer 3gew.-%igen wässrigen Wasserstoffperoxidlösung versetzt. Der Kneter wurde bei Maximaldrehzahl (ca. 98 Upm der schnelleren Welle, ca. 49 Upm der langsameren Welle, Verhältnis ca. 2:1) gerührt. Sofort nach der Zugabe von Wasserstoffperoxid wurde der Knetermantel mit 80°C warmen Wärmeträger beheizt. Nach Erreichen der Maximaltemperatur wurde die Mantelheizung abgeschaltet und im Kneter weitere 15 Minuten nachreagieren lassen. Das erhaltene Polymergel wurde auf 65°C abgekühlt und ausgeleert. Die Trocknung des Polymergels erfolgte bei 175°C für 75 Minuten mit einer Beladung von 700 g pro Blech im Umlufttrockenschrank. Nach dreimaligem Mahlen in einem Walzenstuhl (Gebr. Baumeister LRC 125/70, Spalt-

breiten 1000 μm, 600 μm, 400 μm) wurden die Polymerpartikel auf einen Siebschnitt zwischen 850 und 100 μm abgesiebt.

Die erhaltenen wasserabsorbierenden Polymerpartikel wiesen einen Neutralisationsgrad von 75 mol-% auf. Wasserabsorbierende Polymerpartikel mit einem Neutralisationsgrad von 72 mol-% und 77 mol-% wurden analog durch Anpassung der Mengen an Natriumacrylatlösung, Acrylsäure und Wasser erhalten, wobei der Feststoffgehalt der Monomerlösung konstant gehalten wurde.

1000 g dieser Polymerpartikel wurden in einen Gebr. Lödige Labormischer (Typ M5R) überführt. Bei ca. 23°C wurde eine Mischung aus 0,6 g 2-Hydroxyethyloxazolidin-2-on, 0,6 g 1,3-Propandiol, 16,5 g Wasser, 11,5 g 2-Propanol und einer wässrigen Aluminiumsalzlösung (1 g, 2 g, 4 g bzw. 6 g 25gew.-%iges Aluminiumlaktat [18917-91-4], 2,4 g bzw. 3,6 g 26,8gew.-%iges Aluminiumsulfat [10043-01-3] oder 1,6 g bzw. 2,4 g 17,4gew.-%iges basisches Aluminiumacetat [7360-44-3]) über eine Düse aufgesprüht. Die besprühten Polymerpartikel wurden in einen anderen Gebr. Lödige Labormischer überführt, der schnell auf 170°C, 175°C bzw. 180°C erwärmt und 60 Minuten bei dieser Temperatur gehalten wurde. Nach dem Abkühlen wurden die oberflächennachvernetzten Polymerpartikel auf einen Siebschnitt zwischen 850 und 100 μm abgesiebt.

In einer 500 ml Glasflasche wurden 100 g oberflächennachvernetzte Polymerpartikel ggf. mit 0,1 g, 0,2 g bzw. 0,3 g Siliziumdioxid (Sipernat® D17) für 15 Minuten mittels eines Turbula® Mischers vom Typ T2F (Willy A. Bachofen AG Maschinenfabrik; Muttenz; CH) mit 45 Upm gemischt.

Die erhaltenen wasserabsorbierenden Polymerpartikel wurden analysiert. Die Ergebnisse sind in den folgenden Tabellen zusammengefasst:

Tab. 1: Neutralisationsgrad 72 mol-% und Oberflächennachvernetzung bei 170°C

| Bsp. | Al³⁺ [10⁻⁶ mol/g] | vor SiO₂-Zusatz | | | nach SiO₂-Zusatz | | | |
|------|------|------|------|------|------|------|------|------|
| | $Al^{3+}$ [$10^{-6}$ mol/g] | Caking [%] | CRC [g/g] | AUL0.7psi [g/g] | SiO₂ [Gew.-%] | Caking [%] | CRC [g/g] | AUL0.7psi [g/g] |
| 1*) | 0 | | 36,3 | 22,9 | 0,1 | 32,8 | | |
| 2*) | | | | | 0,2 | 7,0 | | |
| 3*) | | | | | 0,3 | 5,1 | | |
| 4*) | 0,85 | | 35,0 | 23,8 | 0,1 | 30,6 | 35,8 | 19,8 |
| 5*) | | | | | 0,2 | 10,7 | 36,0 | 17,3 |
| 6*) | | | | | 0,3 | 3,0 | 35,3 | 17,0 |
| 7*) | 1,7 | | 34,5 | 23,2 | 0,1 | 19,9 | 36,4 | 19,0 |
| 8*) | | | | | 0,2 | 17,1 | 35,4 | 17,3 |
| 9*) | | | | | 0,3 | 1,1 | 35,4 | 17,4 |
| 10 | 3,4 | 68,1 | 35,7 | 24,4 | 0,1 | 0,8 | 36,3 | 20,0 |
| 11 | | | | | 0,2 | 0,7 | 36,5 | 18,4 |
| 12 | | | | | 0,3 | 0,9 | 36,2 | 17,8 |
| 13 | 5,1 | 65,0 | 35,9 | 25,0 | 0,1 | 0,9 | 35,8 | 20,7 |
| 14 | | | | | 0,2 | 1,0 | 35,6 | 18,3 |
| 15 | | | | | 0,3 | 1,1 | 35,2 | 18,3 |
| *) Vergleichsbeispiel | | | | | | | | |

Tab. 2: Neutralisationsgrad 75 mol-% und Oberflächennachvernetzung bei 175°C

| Bsp. | Al³⁺ [10⁻⁶ mol/g] | vor SiO₂-Zusatz | | | nach SiO₂-Zusatz | | | |
|------|------|------|------|------|------|------|------|------|
| | $Al^{3+}$ [$10^{-6}$ mol/g] | Caking [%] | CRC [g/g] | AUL0.7psi [g/g] | SiO₂ [Gew.-%] | Caking [%] | CRC [g/g] | AUL0.7psi [g/g] |
| 16*) | 0 | 99,5 | 35,9 | 23,0 | 0,1 | 61,3 | 36,1 | 20,8 |
| 17*) | | | | | 0,2 | 34,6 | 35,8 | 20,1 |
| 18*) | | | | | 0,3 | 8,9 | 35,6 | 19,6 |
| 19 | 3,4 | 97,6 | 35,8 | 25,6 | 0,1 | 1,0 | 35,9 | 22,3 |

(fortgesetzt)

| Bsp. | $Al^{3+}$ [$10^{-6}$ mol/g] | vor SiO$_2$-Zusatz | | | SiO$_2$ [Gew.-%] | nach SiO$_2$-Zusatz | | |
|---|---|---|---|---|---|---|---|---|
| | | Caking [%] | CRC [g/g] | AUL0.7psi [g/g] | | Caking [%] | CRC [g/g] | AUL0.7psi [g/g] |
| 20 | | | | | 0,2 | 0,7 | 35,6 | 21,9 |
| 21 | | | | | 0,3 | 0,6 | 35,2 | 21,3 |
| 22 | 5,1 | 87,2 | 34,8 | 24,6 | 0,1 | 0,7 | 35,4 | 23,0 |
| 23 | | | | | 0,2 | 0,3 | 35,4 | 21,4 |
| 24 | | | | | 0,3 | 0,6 | 34,3 | 20,9 |
| *) Vergleichsbeispiel | | | | | | | | |

Tab. 3: Neutralisationsgrad 77 mol-% und Oberflächennachvernetzung bei 175°C

| Bsp. | $Al^{3+}$ [$10^{-6}$ mol/g] | vor SiO$_2$-Zusatz | | | SiO$_2$ [Gew.-%] | nach SiO$_2$-Zusatz | | |
|---|---|---|---|---|---|---|---|---|
| | | Caking [%] | CRC [g/g] | AUL0.7psi [g/g] | | Caking [%] | CRC [g/g] | AUL0.7psi [g/g] |
| 25*) | 0 | 100,0 | 36,9 | 21,6 | 0,1 | 10,6 | 37,4 | 16,5 |
| 26*) | | | | | 0,2 | 6,3 | 37,3 | 14,3 |
| 27 | 3,4 | 92,3 | 37,9 | 21,3 | 0,1 | 0,6 | 38,2 | 16,6 |
| 28 | | | | | 0,2 | 0,3 | 38,6 | 14,1 |
| 29 | 5,1 | 66,4 | 37,2 | 19,6 | 0,1 | 1,1 | 38,7 | 16,4 |
| 30 | | | | | 0,2 | 0,8 | 37,3 | 14,4 |
| *) Vergleichsbeispiel | | | | | | | | |

Tab. 4: Neutralisationsgrad 77 mol-% und Oberflächennachvernetzung bei 180°C

| Bsp. | $Al^{3+}$ [$10^{-6}$ mol/g] | vor SiO$_2$-Zusatz | | | SiO$_2$ [Gew.-%] | nach SiO$_2$-Zusatz | | |
|---|---|---|---|---|---|---|---|---|
| | | Caking [%] | CRC [g/g] | AUL0.7ps i [g/g] | | Caking [%] | CRC [g/g] | AUL0.7psi [g/g] |
| 31*) | 0 | 99,9 | 35,3 | 22,1 | 0,1 | 9,8 | 35,6 | 19,2 |
| 32 | 3,4 | 94,2 | 35,9 | 25,3 | 0,1 | 1,0 | 36,7 | 20,1 |
| 33 | | | | | 0,2 | 0,0 | 36,7 | 19,3 |
| 34 | 5,1 | 51,7 | 34,5 | 23,2 | 0,1 | 0,8 | 35,9 | 22,0 |
| 35 | | | | | 0,2 | 0,5 | 35,6 | 19,9 |
| *) Vergleichsbeispiel | | | | | | | | |

Die Ergebnisse in den Tabellen 1 bis 4 belegen die synergistische Wirkung von Aluminiumkationen und Siliziumdioxid bei der Verminderung der Verbackungsneigung wasserabsorbierender Polymerpartikel.

Zusätzlich zeigen die Ergebnisse, dass bei einer Erhöhung des Neutralisationsgrades um 2 bis 3 mol-% die Temperatur bei der thermischen Oberflächennachvernetzung um ca. 5°C angehoben muss um vergleichbare Werte für die Zentrifugenretentionskapazität (CRC) und die Absorption unter Druck (AUL0.7psi) zu erhalten.

Weiterhin läuft der durch die Beschichtung mit Siliziumdioxid bedingte Abfall der Absorption unter Druck (AUL0.7psi) bei einem Neutralisationsgrad von 75 mol-% durch ein Minimum.

Tab. 5: Neutralisationsgrad 72 mol-%, Oberflächennachvernetzung bei 170°C und 3,4 x $10^{-6}$ mol/g $Al^{3+}$

| Bsp. | Aluminiumsalz | vor SiO$_2$-Zusatz | | | SiO$_2$ [Gew.-%] | nach SiO$_2$-Zusatz | | |
|---|---|---|---|---|---|---|---|---|
| | | Caking [%] | CRC [g/g] | AUL0.7psi [g/g] | | Caking [%] | CRC [g/g] | AUL0.7psi [g/g] |
| 36 | Laktat | | 35,7 | 24,4 | 0,1 | 0,8 | 36,3 | 20,0 |
| 37 | | | | | 0,2 | 0,7 | 36,5 | 18,4 |
| 38 | Sulfat | | 37,3 | 19,8 | 0,1 | 26,7 | 38,0 | 15,3 |
| 39 | | | | | 0,2 | 3,3 | 37,5 | 13,5 |
| 40 | Acetat | | 37,5 | 22,6 | 0,1 | 0,9 | 37,3 | 20,2 |
| 41 | | | | | 0,2 | 0,5 | 36,8 | 19,4 |
| *) Vergleichsbeispiel | | | | | | | | |

Tab. 6: Neutralisationsgrad 72 mol-%, Oberflächennachvernetzung bei 170°C und 5,1 x $10^{-6}$ mol/g $Al^{3+}$

| Bsp. | Aluminiumsalz | vor SiO$_2$-Zusatz | | | SiO$_2$ [Gew.-%] | nach SiO$_2$-Zusatz | | |
|---|---|---|---|---|---|---|---|---|
| | | Caking [%] | CRC [g/g] | AUL0.7psi [g/g] | | Caking [%] | CRC [g/g] | AUL0.7psi [g/g] |
| 42 | Laktat | | 35,9 | 25,0 | 0,1 | 0,9 | 35,8 | 20,7 |
| 43 | | | | | 0,2 | 1,0 | 35,6 | 18,3 |
| 44 | Sulfat | | 38,7 | 18,5 | 0,1 | 5,0 | 37,7 | 14,4 |
| 45 | | | | | 0,2 | 0,0 | 38,0 | 13,4 |
| 46 | Acetat | | 36,5 | 21,3 | 0,1 | 0,6 | 37,9 | 19,7 |
| 47 | | | | | 0,2 | 0,4 | 37,3 | 20,2 |

Die Ergebnisse in den Tabellen 5 und 6 zeigen die Unterschiede bei Verwendung unterschiedlicher Aluminiumsalze. Die Beschichtung mit Aluminiumlaktat führt zu wasserabsorbierenden Polymerpartikeln mit der höchsten Absorption unter Druck (AUL0.7psi). Die mit basischem Aluminiumacetat beschichteten wasserabsorbierenden Polymerpartikel zeigen dagegen den geringsten Abfall der Absorption unter Druck (AUL0.7psi) bei der anschließenden Beschichtung mit Siliziumdioxid.

**Patentansprüche**

1. Verfahren zur Herstellung wasserabsorbierender Polymerpartikel durch Polymerisation einer wässrigen Monomerlösung oder -suspension, enthaltend

   a) mindestens ein ethylenisch ungesättigtes, säuregruppentragendes Monomer, wobei die Säuregruppen zu 72 bis 85 mol-% neutralisiert sind,
   b) mindestens einen Vernetzer,
   c) mindestens einen Initiator,
   d) optional ein oder mehrere mit den unter a) genannten Monomeren copolymerisierbare ethylenisch ungesättigte Monomere und
   e) optional ein oder mehrere wasserlösliche Polymere,

   umfassend Trocknung des erhaltenen wässrigen Polymergels, Mahlung, Klassierung, und thermische Oberflächennachvernetzung, **dadurch gekennzeichnet, dass** die wasserabsorbierenden Polymerpartikel vor der thermischen Oberflächennachvernetzung mit 1,5 x $10^{-6}$ bis 6 x $10^{-6}$ mol/g Aluminiumkationen und nach der thermischen Oberflächennachvernetzung mit 0,0001 bis 0,25 Gew.-% Siliziumdioxid beschichtet werden.

2. Verfahren gemäß Anspruch 1, **dadurch gekennzeichnet, dass** die wasserabsorbierenden Polymerpartikel mit 0,08 bis 0,12 Gew.-% Siliziumdioxid beschichtet werden.

3. Verfahren gemäß einem der Ansprüche 1 bis 2, **dadurch gekennzeichnet, dass** die wasserabsorbierenden Polymerpartikel mit 4 x $10^{-6}$ bis 6 x $10^{-6}$ mol/g Aluminiumkationen beschichtet werden.

4. Verfahren gemäß einem der Ansprüche 1 bis 3, **dadurch gekennzeichnet, dass** 75 bis 77 mol-% der Säuregruppen der wasserabsorbierenden Polymerpartikel neutralisiert sind.

5. Verfahren gemäß einem der Ansprüche 1 bis 4, **dadurch gekennzeichnet, dass** die Menge an Vernetzer b) so eingestellt wird, dass die wasserabsorbierenden Polymerpartikel eine Zentrifugenretentionskapazität von 35 bis 37 g/g aufweisen.

6. Wasserabsorbierende Polymerpartikel, herstellbar gemäß einem Verfahren der Ansprüche 1 bis 5.

7. Hygieneartikel, enthaltend wasserabsorbierende Polymerpartikel gemäß Anspruch 6.

## Claims

1. A process for producing water-absorbing polymer particles by polymerizing an aqueous monomer solution or suspension comprising

   a) at least one ethylenically unsaturated monomer which bears acid groups, which have been neutralized to an extent of 72 to 85 mol%,
   b) at least one crosslinker,
   c) at least one initiator,
   d) optionally one or more ethylenically unsaturated monomers copolymerizable with the monomers specified under a) and
   e) optionally one or more water-soluble polymers,

   comprising drying the resulting aqueous polymer gel, grinding, classifying and thermal surface postcrosslinking, which comprises coating the water-absorbing polymer particles with $1.5 \times 10^{-6}$ to $6 \times 10^{-6}$ mol/g of aluminum cations before the thermal surface postcrosslinking, with 0.0001 to 0.25% by weight of silicon dioxide after the thermal surface postcrosslinking.

2. The process according to claim 1, wherein the water-absorbing polymer particles are coated with 0.08 to 0.12% by weight of silicon dioxide.

3. The process according to either one of claims 1 and 2, wherein the water-absorbing polymer particles are coated with 4 x $10^{-6}$ to 6 x $10^{-6}$ mol/g of aluminum cations.

4. The process according to any one of claims 1 to 3, wherein 75 to 77 mol% of the acid groups of the water-absorbing polymer particles have been neutralized.

5. The process according to any one of claims 1 to 4, wherein the amount of crosslinker b) is adjusted such that the water-absorbing polymer particles have a centrifuge retention capacity of 35 to 37 g/g.

6. A hygiene article comprising water-absorbing polymer particles according to claim 5.

7. A hygiene article comprising water-absorbing polymer particles according to claim 6.

## Revendications

1. Procédé pour la préparation de particules polymères absorbant l'eau par polymérisation d'une solution ou d'une suspension aqueuse de monomères, contenant

   a) au moins un monomère éthyléniquement insaturé, portant des groupes acides, les groupes acides étant neutralisés à raison de 72 à 85% en mole,
   b) au moins un agent de réticulation,

c) au moins un initiateur,

d) éventuellement un ou plusieurs monomères éthyléniquement insaturés copolymérisables avec les monomères cités en a), et

e) éventuellement un ou plusieurs polymères solubles dans l'eau,

comprenant le séchage du gel polymère aqueux obtenu, le broyage, la classification et la post-réticulation thermique en surface, **caractérisé en ce que** les particules polymères absorbant l'eau sont revêtues, avant la post-réticulation thermique en surface, de $1{,}5 \times 10^{-6}$ à $6 \times 10^{-6}$ mole/g de cations d'aluminium et, après la post-réticulation thermique en surface, de 0,0001 à 0,25% en poids de dioxyde de silicium.

2. Procédé selon la revendication 1, **caractérisé en ce que** les particules polymères absorbant l'eau sont revêtues par 0,08 à 0,12% en poids de dioxyde de silicium.

3. Procédé selon l'une quelconque des revendications 1 à 2, **caractérisé en ce que** les particules polymères absorbant l'eau sont revêtues par $4 \times 10^{-6}$ à $6 \times 10^{-6}$ mole/g de cations d'aluminium.

4. Procédé selon l'une quelconque des revendications 1 à 3, **caractérisé en ce que** 75 à 77% en mole des groupes acides des particules polymères absorbant l'eau sont neutralisés.

5. Procédé selon l'une quelconque des revendications 1 à 4, **caractérisé en ce que** la quantité de réticulant b) est réglée de manière telle que les particules polymères absorbant l'eau présentent une capacité de rétention dans une centrifugeuse de 35 à 37 g/g.

6. Particules polymères absorbant l'eau, pouvant être préparées selon un procédé selon les revendications 1 à 5.

7. Articles hygiéniques contenant des particules polymères absorbant l'eau selon la revendication 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3523617 A1
- WO 0053644 A1
- WO 0053664 A1
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- WO 2001038402 A1
- DE 3825366 A1
- US 6241928 B
- EP 0083022 A2
- EP 0543303 A1
- EP 0937736 A2
- DE 3314019 A1
- EP 0450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 2003031482 A1
- DE 3713601 A1

**In der Beschreibung aufgeführte Nicht-Patentliteratur**

- Modern Superabsorbent Polymer Technology. **F.L. BUCHHOLZ ; A.T. GRAHAM.** Monographie. Wiley-VCH, 71-103